Europäisches Patentamt

European Patent Office

Office européen des brevets

(19)

(11) **EP 0 641 810 B1**

(12) **EUROPÄISCHE PATENTSCHRIFT**

(45) Veröffentlichungstag und Bekanntmachung des
Hinweises auf die Patenterteilung:
**06.03.1996 Patentblatt 1996/10**

(51) Int Cl.6: **C08F 255/08**, C08F 8/46,
C09J 151/06

(21) Anmeldenummer: **94113269.8**

(22) Anmeldetag: **25.08.1994**

(54) **Carboxylgruppenhaltige Isobuten-Copolymerisate**

Isobutyene copolymers containing carboxyl groups

Copolymères d'isobutène contenant des groupes carboxyle

(84) Benannte Vertragsstaaten:
**BE DE ES FR GB IT NL**

(30) Priorität: **04.09.1993 DE 4329905**

(43) Veröffentlichungstag der Anmeldung:
**08.03.1995 Patentblatt 1995/10**

(73) Patentinhaber: **BASF AKTIENGESELLSCHAFT**
**D-67056 Ludwigshafen (DE)**

(72) Erfinder:
• **Deckers, Andreas, Dr.**
**D-55234 Flomborn (DE)**
• **Müller, Hans-Joachim, Dr.**
**D-67269 Grünstadt (DE)**
• **Klimesch, Roger, Dr**
**D-64665 Alsbach-Hähnlein (DE)**
• **Wistuba, Eckehardt, Dr.**
**D-67098 Bad Dürkheim (DE)**
• **Plaumann, Heinz, Dr.**
**D-67117 Limburgerhof (DE)**
• **Kolk, Erich, Dr.**
**D-67098 Bad Dürkheim (DE)**
• **Isbarn, Gunther, Dr.**
**D-67311 Tiefenthal (DE)**
• **Fauth, Karl-Heinz**
**D-67319 Wattenheim (DE)**
• **Krobb, Joachim**
**D-76829 Landau (DE)**

(56) Entgegenhaltungen:
**EP-A- 0 234 918         DE-A- 2 014 394**

## EP 0 641 810 B1

**Beschreibung**

Die vorliegende Erfindung betrifft carboxylgruppenhaltige Isobuten-Copolymerisate, erhältlich

a) durch kationische Polymerisation eines Gemisches aus 1 bis 99 mol-% Isobuten und 99 bis 1 mol-% eines 2-Methylalk-1-ens mit 5 bis 8 C-Atomen bei Temperaturen von weniger als 20°C in Anwesenheit halogenhaltiger Lewissäuren und

b) anschließender Pfropfung der auf diese Weise zugänglichen Isobuten-Copolymerisate mit $\alpha,\beta$-ethylenisch ungesättigten Carbonsäuren bzw. Carbonsäurederivaten bei Temperaturen von mehr als 100°C und in Anwesenheit von radikalisch zerfallenden Initiatoren.

Weiterhin betrifft die vorliegende Erfindung ein Verfahren zur Herstellung derartiger carboxylgruppenhaltiger Isobuten-Copolymerisate sowie deren Umsetzung zu vernetzten Isobuten-Copolymerisaten. Darüber hinaus erstreckt sich die vorliegende Erfindung auch auf die Verwendung derartiger Isobuten-Copolymerisate als Klebstoffrohmaterial bzw. als Dichtungsmasse.

Polyisobutene werden durch kationische Polymerisation bei tiefen Temperaturen hergestellt und eignen sich u.a. als Rohmaterialien für Klebstoffe sowie als Dichtungsmassen. Dabei können je nach Anwendungsgebiet nieder- bzw. hochmolekulare Polyisobutene zum Einsatz kommen (Ullmanns Encyklopädie der technischen Chemie, 4. Auflage, Band 19, Seiten 221-1980).

Für einige Anwendungsbereiche, beispielsweise bei Dichtungsmassen reicht die Anbindung der sehr unpolaren Polyisobutenkette an die meist polaren Substrate, die zusammen mit dem Polyisobuten die Dichtungsmasse formen, nicht aus. Darüber hinaus führt das viskoelastische Verhalten des Polyisobutens bei Dichtungsmassen häufig zu Verformungen, die teilweise deutlich über das noch tolerierbare Maß hinausgehen.

Bei Polyolefinen wird die Anbindung an polare Substrate meist dadurch erreicht, daß man diese nachträglich mit carboxylgruppenhaltigen Monomeren pfropft. Dies ist aber bei Polyisobuten nicht möglich, da das Polyisobuten für eine solche Reaktion mit carboxylgruppenhaltigen Monomeren zu wenig reaktiv ist. Es ist lediglich bekannt, durch Copolymerisation mittels Ziegler-Katalysatoren ren Copolymerisate des Isobutens mit 2-Methylalk-1-enen herzustellen (DE-A 20 14 394). Dabei fallen die erhaltenen Isobuten-Copolymerisate aber als niedermolekulare, zähe Öle an, die wegen ihrer geringen Festigkeit für viele Anwendungsbereiche, beispielsweise als Dichtungsmassen, nicht eingesetzt werden können.

Aufgabe der vorliegenden Erfindung war es daher, neuartige Isobuten-Copolymerisate zu entwickeln, die die geschilderten Nachteile nicht aufweisen und die sich aufgrund ihrer hohen Stabilität für viele Anwendungsbereiche gut eignen.

Demgemäß wurden die vorstehend beschriebenen, neuartigen Isobuten-Copolymerisate gefunden.

Nach dem zu den erfindungsgemäßen carboxylgruppenhaltigen Isobuten-Copolymerisaten führenden Verfahren wird zunächst ein Gemisch aus 1 bis 99 mol-% Isobuten und 99 bis 1 mol-% eines 2-Methylalk-1-ens kationisch polymerisiert. Vorzugsweise verwendet man dabei ein Gemisch aus 50 bis 98 mol-%, insbesondere aus 70 bis 95 mol-% Isobuten und 50 bis 2 mol-%, insbesondere aus 30 bis 5 mol-% eines 2-Methylalk-1-ens. Die verwendeten Mol-% sind dabei so zu verstehen, daß die Menge des verwendeten Isobutens und des verwendeten 2-Methylalk-1-ens in ihrer Summe immer 100 mol-% betragen. Anstelle eines 2-Methylalk-1-ens können auch mehrere unterschiedliche 2-Methylalk-1-ene eingesetzt werden.

Als 2-Methylalk-1-ene werden insbesondere 2-Methylbut-1-en, 2-Methylpent-1-en, 2-Methylhex-1-en oder 2-Methylhept-1-en verwendet, wobei 2-Methylpent-1-en bevorzugt eingesetzt wird.

Die kationische Polymerisation des Gemisches aus Isobuten und 2-Methylalk-1-en wird üblicherweise bei Temperaturen von weniger als +20°C, insbesondere bei Temperaturen von weniger als 0°C, durchgeführt. Ein bevorzugtes Herstellungsverfahren ist dabei das sogenannte Bandverfahren der BASF Aktiengesellschaft, wobei das Gemisch aus Isobuten und dem 2-Methylalk-1-en auf einem endlos geführten Stahlband in einem Lösungsmittel, vorzugsweise Ethylen, in Anwesenheit von Bortrifluorid kationisch polymerisiert wird (Ullmanns Encyklopädie der technischen Chemie, 4. Auflage, Band 19, Seite 220-1980). Die kationische Polymerisation des Gemisches aus Isobuten und 2-Methylalk-1-en kann auch in üblichen Reaktoren der Kunststofftechnologie sowohl kontinuierlich, als auch halbkontinuierlich oder diskontinuierlich durchgeführt werden, bevorzugt in Lösung, in einer Suspension oder als Substanzpolymerisation.

Die kationische Polymerisation a) des Gemisches aus Isobuten und einem oder mehreren 2-Methylalk-1-enen erfolgt üblicherweise in Anwesenheit halogenhaltiger Lewissäuren wie $BX_3$, $AlX_3$, $SnX_4$, $TiX_4$, $SbX_6$ oder $FeX_3$, wobei X Fluor, Chlor, Brom oder Jod bedeuten kann. Die halogenhaltigen Lewissäuren initiieren dabei die kationische Polymerisation. Als bevorzugte halogenhaltige Lewissäuren verwendet man insbesondere die Halogenide des Bors und des Aluminiums, vorzugsweise Bortrifluorid, Bortrichlorid oder Aluminiumtrichlorid. Die halogenhaltigen Lewissäuren werden in Mengen von 0,01 bis 1 Gew.-%, insbesondere in Mengen von 0,05 bis 0,1 Gew.-%, bezogen auf die Monomere, eingesetzt. Dabei kann es sich empfehlen, die halogenhaltigen Lewissäuren in Form einer 0,1 bis 5 gewichtsprozentigen Lösung in einem inerten Lösungsmittel, beispielsweise in Ethylen, in das Reaktionsgemisch einzubringen. Die durchschnittlichen Polymerisationszeiten liegen üblicherweise bei 0,01 bis 5 Minuten, insbesondere bei 0,5 bis 2 Minuten.

Die Geschwindigkeit des kationischen Polymerisationsvorganges a) kann weiterhin durch Cokatalysatoren gesteuert werden. Dazu eignen sich u.a. protische Verbindungen wie Alkohole, Carbonsäuren etc., vorzugsweise jedoch Alkohole. Mit der Beschleunigung der Polymerisation ist in der Regel eine Erhöhung der Molmasse und eine Verminderung des Katalysatorbedarfs verbunden. Die Kettenlänge der Isobuten-Copolymerisate, besonders im Sinne einer Verkürzung, ist z.B. durch Zugabe von Olefinen (z.B. n-Buten), Halogenwasserstoffen, Mercaptanen und Alkylhalogeniden beeinflußbar, wobei eine Verlängerung der Reaktionszeit und eine Erhöhung des Katalysatorbedarfs eintreten kann, so daß derartige Regler auch gleichzeitig als Katalysatorgifte wirken können.

Durch geeignete Kombination beider Arten von Reglern ist es möglich, das erfindungsgemäße Isobuten-Copolymerisat mit gewünschter Molmasse herzustellen.

Je nach späterem Verwendungszweck können Lösungviskositäten (Staudingerindex $I_o$) der Isobuten-Copolymerisate von 50 bis 2000 ml/g eingestellt werden. Dies entspricht einer durchschnittlichen Molmasse $\bar{M}$v (Viskositätsmittel) von 50.000 bis etwa 10.000.000.

Die auf diese Weise erhaltenen Copolymerisate enthalten 1 bis 99 mol-% Isobuten und 99 bis 1 mol-% eines oder mehrerer 2-Methylalk-1-ene. Vorzugsweise liegt der Anteil des Isobutens bei 50 bis 98 mol-%, insbesondere bei 70 bis 95 mol-% und der der 2-Methylalk-1-ene bei 50 bis 2 mol-%, insbesondere bei 30 bis 5 mol-%.

Die Copolymerisate werden anschließend durch Pfropfung b) mit $\alpha,\beta$-ungesättigten Carbonsäuren bzw. Carbonsäurederivaten zu den erfindungsgemäßen carboxylgruppenhaltigen Isobuten-Copolymerisaten umgesetzt.

Bei dem, zu den erfindungsgemäßen Isobuten-Copolymerisaten führenden Verfahren werden als Pfropfmonomere $\alpha,\beta$-ungesättigte Carbonsäuren bzw. Carbonsäurederivate verwendet. Unter $\alpha,\beta$-ungesättigten Carbonsäuren bzw. Carbonsäurederivaten sollen dabei sowohl $\alpha,\beta$-ungesättigte Mono- als auch Dicarbonsäuren, sowie deren Ester-, Anhydrid- oder Amidderivate verstanden werden. Bevorzugt werden u.a. Maleinsäure, Fumarsäure, Itaconsäure, Acrylsäure, Crotonsäure oder deren Anhydride eingesetzt, wobei Maleinsäureanhydrid besonders geeignet ist.

Die Pfropfung b) der Isobuten-Copolymerisate erfolgt vorzugsweise bei Temperaturen von mehr als 100°C, insbesondere bei Temperaturen von 120 bis 300°C, sowohl in Lösung, beispielsweise als 1 bis 40 gewichtsprozentige Lösung in apolaren Lösungsmitteln, als auch in einer Schmelze. Dafür geeignete Apparaturen sind beispielsweise Kneter oder Extruder. Die Pfropfung b) wird durch radikalisch zerfallende Initiatoren ausgelöst.

Als radikalisch zerfallende Initiatoren werden dabei üblicherweise organische Azoverbindungen oder organische Peroxide verwendet, wobei letztere bevorzugt eingesetzt werden. Besonders bevorzugte organische Peroxidverbindungen weisen Halbwertstemperaturen bei einer Minute von 60 bis 200°C auf. Innerhalb dieser Verbindungen sind insbesondere Dicumylperoxid, Monocumyl(tert.butyl)-peroxid, Di(tert.butyl)peroxid, 2,5-Dimethyl-2,5-di(tert.butylperoxy)hexan und 2,5-Dimethyl-2,5-di(tert.butylperoxy)hexin-3 hervorzuheben.

In einer bevorzugten Ausführungsform des zu den erfindungsgemäßen Copolymerisaten führenden Verfahrens dosiert man das Isobuten-Copolymerisat zusammen mit dem zu pfropfenden Monomeren und dem radikalisch zerfallenden Initiator in einen Reaktor, in welchem sich ein inertes Lösungsmittel befindet und pfropft bei 150 bis 300°C 0,5 bis 30 Minuten lang. Bevorzugt wird dabei das zu pfropfende Monomere im flüssigen Zustand hinzugefügt, wobei dieses entweder vorher erwärmt oder aber in einem inerten Lösungsmittel gelöst wird. Das zu pfropfende Monomere kann auch nach dem Aufschmelzen des Isobuten-Copolymerisats in den Reaktor gegeben werden. Der radikalisch zerfallende Initiator wird üblicherweise entweder als Substanz oder aber als Lösung in einem inerten Kohlenwasserstoff hinzugefügt.

Die auf diese Weise erhältlichen gepfropften Isobuten-Copolymerisate enthalten üblicherweise 0,01 bis 1,0 Gew.-% des zu pfropfenden Monomeren, d.h. der $\alpha,\beta$-ungesättigten Carbonsäure bzw. dessen Carbonsäurederivats.

Sofern die Pfropfreaktion in einer Lösung durchgeführt wird, erfolgt die Isolierung der erfindungsgemäßen carboxylgruppenhaltigen Isobuten-Copolymerisate durch Ausfällen.

Zur Steigerung der Ausbeute kann es sich bei der Pfropfreaktion empfehlen, neben einem Lösungsmittel noch geringe Mengen eines Vinylaromaten, beispielsweise Styrol mitzuverwenden.

Die Pfropfreaktion erfolgt vorzugsweise in Anwesenheit von 0,01 bis 1 Gew.-%, insbesondere von 0,1 bis 0,5 Gew.-%, des zu pfropfenden Monomeren. Der radikalisch zerfallende Initiator ist dabei üblicherweise in Mengen von 0,01 bis 1 Gew.-%, insbesondere in Mengen von 0,1 bis 0,5 Gew.-% zugegen. Die Gewichtsangaben beziehen sich dabei auf das Isobuten-Copolymerisat.

Das erfindungsgemäße, carboxylgruppenhaltige Isobuten-Copolymerisat eignet sich insbesondere als Klebstoffrohmaterial.

Des weiteren ist es möglich, die erfindungsgemäßen, carboxylgruppenhaltigen Isobuten-Copolymerisate mit organischen Vernetzungsmitteln umzusetzen. Dabei entstehen ebenfalls erfindungsgemäße vernetzte Isobuten-Copolymerisate.

Die Vernetzungsreaktion erfolgt in üblichen Mischern, Knetern oder Extrudern bei Temperaturen von 150 bis 300°C, insbesondere von 180 bis 250°C und bei Verweilzeiten des Reaktionsgemisches von 0,1 bis 10 Minuten, insbesondere von 0,5 bis 5 Minuten. Das Vernetzungsmittel kann sowohl in reiner Form als auch in Form einer Lösung in einem inerten Lösungsmittel, beispielsweise in Tetrahydrofuran, Toluol, Hexan oder Heptan, eingebracht werden.

Als Vernetzungsmittel kommen dabei die bei Vernetzungsreaktionen üblichen Substanzen in Frage, insbesondere mehrwertige primäre oder sekundäre Amine, Aminoalkohole, Alkohole oder Epoxidgruppen enthaltende Verbindungen. Bevorzugt werden dabei Verbindungen, die mindestens 2 C-Atome enthalten, beispielsweise Ethylendiamin, Diethylentriamin, Triethylentetramin, Diethanolamin, Triethanolamin, Dipropanolamin, Tripropanolamin, Ethylenaminoethylamin, Dimethylethylendiamin, Diethylaminopropylamin, Dimethylneopentandiamin, 1,8-Octandiamin, 4,7-Dioxadecan-1.10-diamin, Polytetrahydrofuran-$\alpha$-$\omega$-diamin, Dimethyldipropylentriamin, Neopentandiamin, Dimethylaminobutanol, Dodecyldiamin, Hexamethylendiamin, Diethanolamin, N,N-Diethylaminopropylamin, 1.4.-Bis[2,3-epoxy-propyloxy]-benzol, Bis-[2,3-epoxy-propyl]-ether oder 1,2 - 5,6-Bis-epoxy-hexan. Besonders bevorzugte Vernetzungsmittel sind polyfunktionelle Amine oder polyfunktionelle Isocyanate.

Das organische Vernetzungsmittel wird dabei üblicherweise in Mengen von 0,5 bis 500 mol-%, vorzugsweise in Mengen von 1 bis 300 mol-%, bezogen auf den Gehalt des gepfropften Comonomeren dem Isobuten-Copolymerisat hinzugefügt.

Weiterhin besteht die Möglichkeit, Pfropfung und Vernetzung in einem einzigen Verarbeitungsschritt und in einer Mischeinrichtung durchzuführen, was verfahrenstechnisch erheblich weniger aufwendig ist.

Die ebenfalls erfindungsgemäßen vernetzten Isobuten-Copolymerisate sind mechanisch sehr feste Materialien und zeichnen sich u.a. durch eine hohe Reißkraft und eine hohe Reißdehnung aus. Sie eignen sich insbesondere als Klebstoffrohmaterialien bzw. als Dichtungsmassen.

Beispiele 1 bis 4 und Vergleichsbeispiele A und B

Beispiel 1

Herstellung eines Isobuten-Copolymerisats

Ein Gemisch aus 90 g flüssigem Isobuten (93,1 mol-%) und 10 g 2-Methylpent-1-en (6,9 mol-%) wurde durch Zugabe von 350 g flüssigem Ethylen auf eine Temperatur von -104°C abgekühlt. Anschließend fügte man dieser Lösung zunächst 0,1 Gew.-% Bortrifluorid (bezogen auf die Comonomere) in Form einer 1 Gew.-% Lösung in Ethylen und danach 0,1 g Isobutanol hinzu, wodurch die Polymerisation gestartet wurde. Nach 20 Sekunden war die kationische Polymerisation beendet und man ließ die nicht umgesetzten Comonomere sowie das Ethylen abdampfen. Daraus resultierte ein Copolymerisat aus 93,1 mol-% Isobuten und 6,9 mol-% 2-Methylpent-1-en mit einem Staudingerindex $I_o = 98$ ml/g, was einem Viskositätsmittel $\overline{M} v = 255.000$ entspricht.

Beispiel 2

Pfropfung des Isobuten-Copolymerisats

9,5 g des aus dem Beispiel 1 erhaltenen Copolymerisats und 0,5 g Maleinsäureanhydrid wurden bei einer Temperatur von 170°C in 90 g Isododecan gelöst. Zu dieser Lösung fügte man 0,25 g 2,5-Dimethyl-2,5-di(tert.butylperoxy) hexan hinzu und ließ die Reaktion 1 Stunde bei dieser Temperatur laufen. Nach Abkühlen und Ausfällen in Aceton erhielt man ein carboxylgruppenhaltiges Isobuten-Copolymerisat mit einem Gehalt an Maleinsäureanhydrid von 0,16 Gew.-%.

Vergleichsbeispiel A

Analog dem Beispiel 2 wurde 9,5 g Isobutenhomopolymerisat mit einem Staudingerindex $I_o = 103$ ml/g, was einem Viskositätsmittel $\overline{M} v = 350.000$ entspricht, mit 0,5 g Maleinsäureanhydrid versetzt. Das ausgefällte Polymerisat enthielt kein chemisch gebundenes Maleinsäureanhydrid.

Beispiel 3

In einem Zweischneckenextruder ("ZSK-30" der Firma Werner & Pfleiderer) wurden kontinuierlich pro Stunde 10 kg des aus dem Beispiel 1 erhaltenen Isobuten-Copolymerisats plastifiziert, d.h. geschmolzen und bei einer Temperatur von 200°C mit 0,5 Gew.-% Maleinsäureanhydrid umgesetzt. In einer der Reaktionszone des Extruders nachgeschalteten Entgasungszone wurde das Reaktionsgemisch von nichtumgesetztem Maleinsäureanhydrid befreit. Man erhielt ein carboxylgruppenhaltiges Isobuten-Copolymerisat mit einem Gehalt an Maleinsäure von 0,19 Gew.-%.

Vergleichsbeispiel B

Wie im Beispiel 3 beschrieben, wurde das Isobutenhomopolymerisat des Vergleichsbeispiels A mit 0,5 Gew.-% Maleinsäureanhydrid umgesetzt. Das ausgetragene Polymerisat enthielt kein chemisch gebundenes Maleinsäureanhydrid.

Beispiel 4

Vernetzung des gepfropften Isobuten-Copolymerisats

In einem 2-Schaufel-Kneter der Firma Brabender wurden bei Raumtemperatur 50 g des aus dem Beispiel 2 erhaltenen gepfropften Isobuten-Copolymerisats zunächst geknetet und anschließend vernetzt. Bei der eigentlichen Vernetzung gab man nun über einen Zeitraum von 5 Minuten die in der nachfolgenden Tabelle angegebenen Vernetzer hinzu und vernetzte jeweils 10 Minuten. Anschließend wurde das erhaltene vernetzte Isobuten-Copolymerisat abgelassen und zur Bestimmung der Reißkraft und Reißdehnung nach DIN 53 504 bei 80°C zwischen 2 Teflonfolien (1 mm Abstand) gepreßt. Das viskoelastische Verhalten (Nachfließverhalten) der Filmproben wurde visuell beurteilt.

Aus der nachfolgenden Tabelle geht hervor, daß sich die vernetzten Isobuten-Copolymerisate (Proben Nr. B-F) gegenüber dem unvernetzten, lediglich gepfropften Isobuten-Copolymerisat (Proben Nr. A) insbesondere durch eine deutlich erhöhte Reißdehnung und ein verringertes Nachfließverhalten auszeichnen.

Tabelle:

| Probe-Nr. | Zusatz [Gew.-%] | Reißkraft [N/mm$^2$] | Reißdehnung [%] | Nachfließen* bei RT |
|---|---|---|---|---|
| A | – | $\sim$0 | 355 | 5 |
| B | TEA 0,5 | 0,1 | 640 | 2 |
| C | TEA 1,0 | 0,1 | 750 | 1 |
| D | TEA 0,5 | $\sim$0 | 868 | 4 |
| E | PI 0,5 | 0,1 | 1 142 | 3 |
| F | PI 2,0 | 0,1 | 1 311 | 3 |

\*    Nachfließen bei Raumtemperatur (RT):
      viskoelastisches Verhalten

Nachfließverhalten:   1 ≙ nicht nachfließend
                      5 ≙ stark nachfließend

TEA = Triethanolamin
PI  = Polyisocyanat  (Basonat$^{®}$ FDS 3391 eingetragenes
                      Warenzeichen der BASF)

**Patentansprüche**

1.  Carboxylgruppenhaltige Isobuten-Copolymerisate, erhältlich

    a) durch kationische Polymerisation eines Gemisches aus 1 bis 99 mol-% Isobuten und 99 bis 1 mol-% eines 2-Methylalk-1-ens mit 5 bis 8 C-Atomen bei Temperaturen von weniger als 20°C in Anwesenheit halogenhaltiger Lewissäuren und

b) anschließender Pfropfung der auf diese Weise zugänglichen Isobuten-Copolymerisate mit $\alpha,\beta$-ethylenisch ungesättigten Carbonsäuren bzw. Carbonsäurederivaten bei Temperaturen von mehr als 100°C und in Anwesenheit von radikalisch zerfallenden Initiatoren.

**2.** Carboxylgruppenhaltige Isobuten-Copolymerisate nach Anspruch 1, wobei bei der kationischen Polymerisation a) ein Gemisch aus 50 bis 98 mol-% Isobuten und 50 bis 2 mol-% eines 2-Methylalk-1-ens mit 5 bis 8 C-Atomen eingesetzt wird.

**3.** Carboxylgruppenhaltige Isobuten-Copolymerisate nach den Ansprüchen 1 oder 2, wobei als 2-Methylalk-1-en 2-Methylpent-1-en verwendet wird.

**4.** Carboxylgruppenhaltige Isobuten-Copolymerisate nach den Ansprüchen 1 bis 3, wobei die kationische Polymerisation a) bei Temperaturen von weniger als 0°C durchgeführt wird.

**5.** Carboxylgruppenhaltige Isobuten-Copolymerisate nach den Ansprüchen 1 bis 4, wobei die Pfropfung b) bei Temperaturen von 120 bis 300°C durchgeführt wird.

**6.** Carboxylgruppenhaltige Isobuten-Copolymerisate nach den Ansprüchen 1 bis 5, wobei bei der Pfropfung b) als radikalisch zerfallende Initiatoren peroxidische oder azogruppenhaltige Verbindungen eingesetzt werden.

**7.** Verfahren zur Herstellung von carboxylgruppenhaltigen Isobuten-Copolymerisaten gemäß den Ansprüchen 1 bis 6, dadurch gekennzeichnet, daß man zunächst ein Gemisch aus 1 bis 99 mol-% Isobuten und 99 bis 1 mol-% eines 2-Methylalk-1-ens mit 5 bis 8 C-Atomen bei Temperaturen von weniger als 20°C in Anwesenheit halogenhaltiger Lewissäuren kationisch polymerisiert und anschließend die auf diese Weise zugänglichen Isobuten-Copolymerisate mit $\alpha,\beta$-ethylenisch ungesättigten Carbonsäuren bzw. Carbonsäurederivaten bei Temperaturen von mehr als 100°C und in Anwesenheit von radikalisch zerfallenden Initiatoren pfropft.

**8.** Verwendung der carboxylgruppenhaltigen Isobuten-Copolymerisate gemäß den Ansprüchen 1 bis 6 als Klebstoffrohmaterial.

**9.** Vernetzte Isobuten-Copolymerisate, dadurch erhältlich, daß man die carboxylgruppenhaltigen Isobuten-Copolymerisate nach den Ansprüchen 1 bis 6 mit organischen Vernetzungsmitteln umsetzt.

**10.** Vernetzte Isobuten-Copolymerisate nach Anspruch 9, wobei als organische Vernetzungsmittel polyfunktionelle Amine oder Isocyanate verwendet werden.

**11.** Verfahren zur Herstellung von vernetzten Isobuten-Copolymerisaten gemäß den Ansprüchen 9 oder 10, dadurch gekennzeichnet, daß man die carboxylgruppenhaltigen Isobuten-Copolymerisate gemäß den Ansprüchen 1 bis 6 mit organischen Vernetzungsmitteln umsetzt.

**12.** Verfahren nach Anspruch 11, dadurch gekennzeichnet, daß die Umsetzung der carboxylgruppenhaltigen Isobuten-Copolymerisate mit den organischen Vernetzungsmitteln bei Temperaturen von 0 bis 200°C erfolgt.

**13.** Verwendung der vernetzten Isobuten-Copolymerisate gemäß den Ansprüchen 9 oder 10 als Klebstoffrohmaterial bzw. als Dichtungsmasse.

**Claims**

**1.** A carboxyl-containing isobutene copolymer, obtainable

a) by cationic polymerization of a mixture of from 1 to 99 mol% of isobutene and from 99 to 1 mol% of a 2-methylalk-1-ene of 5 to 8 carbon atoms at less than 20°C in the presence of a halogen-containing Lewis acid and

b) subsequent grafting of the isobutene copolymer obtainable in this manner with an $\alpha,\beta$-ethylenically unsaturated carboxylic acid or carboxylic acid derivative at above 100°C and in the presence of a free radical initiator.

**2.** A carboxyl-containing isobutene copolymer as claimed in claim 1, wherein a mixture of 50 to 98 mol% of isobutene and from 50 to 2 mol% of a 2-methylalk-1-ene of 5 to 8 carbon atoms is used in the cationic polymerization a).

3. A carboxyl-containing isobutene copolymer as claimed in claim 1 or 2, wherein the 2-methylalk-1-ene used is 2-methylpent-1-ene.

4. A carboxyl-containing isobutene copolymer as claimed in any of claims 1 to 3, wherein the cationic polymerization a) is carried out at below 0°C.

5. A carboxyl-containing isobutene copolymer as claimed in any of claims 1 to 4, wherein the grafting b) is carried out at from 120 to 300°C.

6. A carboxyl-containing isobutene copolymer as claimed in any of claims 1 to 5, wherein peroxide compounds or compounds containing azo groups are used as free radical initiators in the grafting b).

7. A process for the preparation of a carboxyl-containing isobutene copolymer as claimed in any of claims 1 to 6, wherein a mixture of from 1 to 99 mol% of isobutene and from 99 to 1 mol% of a 2-methylalk-1-ene of 5 to 8 carbon atoms is first subjected to cationic polymerization at below 20°C in the presence of a halogen-containing Lewis acid, and the isobutene copolymer obtainable in this manner is then grafted with an $\alpha,\beta$-thylenically unsaturated carboxylic acid or carboxylic acid derivative at above 100°C and in the presence of a free radical initiator.

8. Use of a carboxyl-containing isobutene copolymer as claimed in any of claims 1 to 6 as an adhesive raw material.

9. A crosslinked isobutene copolymer, obtainable by reacting a carboxyl-containing isobutene copolymer as claimed in any of claims 1 to 6 with an organic crosslinking agent.

10. A crosslinked isobutene copolymer as claimed in claim 9, wherein polyfunctional amines or isocyanates are used as organic crosslinking agents.

11. A process for the preparation of a crosslinked isobutene copolymer as claimed in claim 9 or 10, wherein a carboxyl-containing isobutene copolymer as claimed in any of claims 1 to 6 is reacted with an organic crosslinking agent.

12. A process as claimed in claim 11 wherein the reaction of the carboxyl-containing isobutene copolymer with the organic crosslinking agent is carried out at from 0 to 200°C.

13. Use of a crosslinked isobutene copolymer as claimed in claim 9 or 10 as an adhesive raw material or as a sealing compound.

**Revendications**

1. Copolymères d'isobutylène contenant des groupements carboxyle, obtenus

a) par polymérisation cationique d'un mélange de 1 à 99% en moles d'isobutylène et de 99 à 1% en moles d'un 2-méthylalcéne-1 à 5-8 atomes de carbone, à une température de moins de 20°C et en présence d'acides de Lewis halogénés, et
b) greffage subséquent des copolymères d'isobutylène obtenus de cette manière avec des acides carboxyliques à insaturation $\alpha,\beta$-éthylénique ou avec des dérivés d'acides carboxyliques, à une température de plus de 100°C et en présence d'amorceurs radicalaires.

2. Copolymères d'isobutylène contenant des groupements carboxyle selon la revendication 1, un mélange de 50 à 98% en moles d'isobutylène et de 50 à 2% en moles d'un 2-methylalcéne-1 à 5-8 atomes de carbone étant utilisé dans la polymérisation cationique a).

3. Copolymères d'isobutylène contenant des groupements carboxyle selon la revendication 1 ou 2, du 2-méthylpentène-1 étant utilisé comme 2-méthylalcène-1.

4. Copolymères d'isobutylène contenant des groupements carboxyie selon l'une quelconque des revendications 1 à 3, la polymérisation cationique a) étant menée à des températures de moins de 0°C.

5. Copolymères d'isobutylène contenant des groupements carboxyle selon l'une quelconque des revendications 1 à 4, le greffage b) étant effectué à des températures de 120 à 300°C.

6. Copolymères d'isobutylène contenant des groupements carboxyle selon l'une quelconque des revendications 1 à 5, des composés du type peroxyde ou contenant des groupements azo étant utilisés comme amorceurs radicalaires dans le greffage b).

7. Procédé de préparation de copolymères d'isobutylène contenant des groupements carboxyle selon l'une quelconque des revendications 1 à 6, caractérisé en ce que l'on commence par effectuer la polymérisation cationique d'un mélange de 1 à 99% en moles d'isobutylène et de 99 à 1% en moles d'un 2-méthylalcène-1 à 5-8 atomes de carbone, à une température de moins de 20°C et en présence d'acides de Lewis halogénés, puis on greffe les copolymères d'isobutylène obtenus de cette manière avec des acides carboxyliques à insaturation $\alpha,\beta$-éthylénique ou des dérivés d'acide carboxylique, à une température de plus de 100°C et en présence d'amorceurs radicalaires.

8. Utilisation des copolymères d'isobutylène contenant des groupements carboxyle selon l'une quelconque des revendications 1 à 6 comme matière première de colles.

9. Copolymères d'isobutylène réticulés, obtenus en faisant réagir les copolymères d'isobutylène contenant des groupements carboxyle selon l'une quelconque des revendications 1 à 6 avec des réticulants organiques.

10. Copolymères d'isobutylène réticulés selon la revendication 9, dans lesquels des amines polyfonctionnelles ou des isocyanates sont utilisés comme reticulants organiques.

11. Procédé de préparation de copolymères d'isobutylène réticulés selon la revendication 9 ou 10, caractérisé en ce que l'on fait réagir les copolymères d'isobutylène contenant des groupements carboxyle selon l'une quelconque des revendications 1 à 6 avec des réticulants organiques.

12. Procédé selon la revendication 11, caractérisé en ce que la réaction des copolymères d'isobutylène contenant des groupements carboxyle avec les réticulants organiques est effectuée à des températures de 0 à 200°C.

13. Utilisation des copolymères d'isobutylène réticulés selon la revendication 9 ou 10 comme matière première de colles ou comme masse d'étanchéité.